# EUROPÄISCHE PATENTSCHRIFT

(11) **EP 2 218 688 B1**
(45) Veröffentlichungstag und Bekanntmachung des Hinweises auf die Patenterteilung: **04.04.2012**
(21) Anmeldenummer: 10151524.5
(22) Anmeldetag: 25.01.2010
(51) Int. Cl.: C02F 3/28, B01D 21/00

(54) **Vorrichtung und Verfahren zur anaeroben Reinigung von Abwasser**
Method and device for anaerobic cleaning of waste water
Procédé et dispositif de nettoyage anaérobie d'eau usée

(30) Priorität: 11.02.2009 DE 102009008489
(43) Veröffentlichungstag der Anmeldung: 18.08.2010
(73) Patentinhaber: Technocon GmbH, 38678 Clausthal-Zellerfeld (DE)
(72) Erfinder: Vogelpohl, Alfons, Professor Dr.-Ing., 38678 Clausthal-Zellerfeld (DE); Geißen, Sven-Uwe, Professor Dr.-Ing., 14109 Berlin (DE); Kim, Soo-Myung, Dr.-Ing., 64569 Nauheim (DE)
(74) Vertreter: Döring, Roger

(56) Entgegenhaltungen:
- CN-A- 1 803 668
- DE-A1- 3 626 484
- DE-A1- 3 800 713
- GB-A- 2 114 013
- JP-A- 8 117 777
- JP-A- 2002 159 990
- US-A1- 2003 038 079

## Beschreibung

Die Erfindung bezieht sich auf eine Vorrichtung zur anaeroben Reinigung von Abwasser gemäß dem Oberbegriff des Patentanspruchs 1.

Eine solche Vorrichtung mit entsprechendem Verfahren zu ihrem Betrieb geht aus der JP 2002 159990 A hervor.

Vorrichtungen zur anaeroben Reinigung von Abwasser und entsprechende Verfahren haben in den letzten Jahren zunehmend an Bedeutung gewonnen, da sie die im Abwasser enthaltenen organischen Substanzen im wesentlichen zu nutzbarem Biogas umsetzen und relativ wenig an überschüssiger Biomasse erzeugen. Außerdem entfällt die bei aeroben Verfahren notwendige Belüftung. Wegen einer hohen spezifischen Schadstoffbelastung werden nur geringe Reaktorvolumina benötigt und es können Reaktoren mit schlanker Bauart und entsprechend geringem Platzbedarf eingesetzt werden. Als Reaktoren werden dabei Behälter aus Metall, Kunststoff oder Beton verwendet.

Die bekannte, als Bioreaktor bezeichnete Vorrichtung nach der DE 691 04 837 T2 weist einen Reaktor-Behälter mit einem Einlaßsystem sowie einer oberhalb desselben befindlichen Reaktionskammer auf. Die Ausströmöffnungen von Einlaßrohren des Einlaßsystems sind wenigstens teilweise tangential gerichtet und das Einlaßsystem ist in einer im Bodenbereich des Reaktor-Behälters angeordneten Einlaßkammer angeordnet. Die Einlaßkammer ist von der Reaktionskammer durch eine wenigstens einen radialen Schlitz aufweisende Abtrennung getrennt. Der Reaktor-Behälter weist in seinem oberen Bereich außerdem ein trichterförmiges Sammelsystem auf. Gas und gereinigtes Abwasser treten im oberen Bereich des Reaktor-Behälters aus demselben aus. Das aus diesem Bioreaktor abgeführte gereinigte Abwasser enthält noch relativ viel organische Inhaltsstoffe, so daß eine aufwendige aerobe Nachbehandlung erforderlich ist.

Bei der bekannten Vorrichtung nach der eingangs erwähnten JP 2002 159990 A wird einem in einem Behälter befindlichen Rohr Rohabwasser über eine Leitung zugeführt. Es tritt über einen Verteiler in einen Ringraum ein, der nach oben durch einen Konus abgeschlossen ist. Das durch die Reaktion der organischen Stoffe des Rohabwassers mit Biomasse im Ringraum entstehende Gas sammelt sich in einem Bereich am oberen Ende des Ringraums. Dieser Bereich des Ringraums ist über Rohre mit einem Sammelbereich verbunden, durch welche das Gas, Flüssigkeit und Biomasse abströmen können. Im Sammelbereich trennt sich das Gas von der Flüssigkeit und der Biomasse. Es wird über ein Entnahmerohr aus demselben abgezogen. Die Flüssigkeit und die Biomasse strömen in einem durch eine Trennwand und die Oberkante eines Lamellenklörers begrenzten Bereich im Behälter nach unten und gelangen über eine Öffnung in den Einzugbereich des Rohres. Ein Teil des mittels den Entnahmerohres abgezogenen Gases wird mittels eines Gebläses über eine Rohrleitung aus dem Entnahmerohr abgesaugt und dem Sammelbereich des Ringraums zugeführt.

Der Erfindung liegt die Aufgabe zugrunde, die eingangs geschilderte Vorrichtung mit zugehörigem Verfahren so zu gestalten, daß die im Reaktor entstehende Biomasse möglichst vollständig im Reaktor zurückgehalten und der Anteil organischer Inhaltsstoffe im gereinigten Abwasser wesentlich herabgesetzt werden kann.

Diese Aufgabe wird entsprechend den kennzeichnenden Merkmalen des Patentanspruchs 1 gelöst.

Ein Lamellenabscheider bzw. Lamellenklärer ist beispielsweise in der SK-Zeitschrift "Acta Montanistica Slovaka", Rocnik 6 (2001), 3, Seiten 195 bis 200 beschrieben. Das Wort "Dreiphasen" berücksichtigt hier das Gemisch aus den drei Phasen Abwasser-Biomasse-Biogas. Der Lamellenklärer besteht im wesentlichen aus einem Paket von parallelen Platten mit einem Abstand der Platten von 50 mm bis 100 mm. Die Platten sind gegenüber der Senkrechten beispielsweise unter einem Winkel von 30° bis 60° angeordnet.

Ein im Bodenbereich des Reaktors durch Fermentation entstehendes Dreiphasengemisch Abwasser-Biomasse-Biogas fließt in den oberen Teil des Reaktors. Dabei trennt sich der größte Teil des Biogases infolge des Dichteunterschieds vom Abwasser und von der Biomasse und steigt in einen Gasraum des Reaktors auf. Das restliche Gemisch tritt seitlich in den Dreiphasen-Lamellenklärer ein, in dem das noch vorhandene Biogas nach oben aufsteigt und seitlich wieder austritt, während die Biomasse sich auf den schrägen Blechen abscheidet, nach unten absinkt und in das Umlaufrohr abfließt. Das vom Biogas und von der Biomasse weitgehend gereinigte Abwasser strömt nach Durchlaufen des Dreiphasen-Lamellenklärers nach oben in eine Beruhigungszone des Reaktors, in der eine weitere Abtrennung des Biogases und der Biomasse stattfindet. Es verläßt den Reaktor als gereinigtes Abwasser, das nur noch eine geringe Menge an Biomasse und an organischen Inhaltsstoffen enthält. Die in der Beruhigungszone noch anfallende Biomasse fließt wiederum in das Umlaufrohr, während das noch vorhandene Biogas in den Gasraum ausgast und über eine Gasleitung abgeführt wird. Überschüssige Biomasse kann im Bodenbereich des Reaktors mittels einer Leitung entnommen werden.

Der wesentliche Vorteil dieser Vorrichtung besteht darin, daß eine kompakte und effektive Trennung der drei Phasen Abwasser. Biomasse und Biogas erreicht wird, weil durch die verbesserte bzw. zusätzliche Abscheidung der Biomasse im Dreiphasen-Lamellenklärer der Anteil der Biomasse im Reaktor und damit die Reaktionsgeschwindigkeit in demselben ansteigt. Durch das Umlaufrohr ergibt sich außerdem eine Umlaufströmung im Reaktor, angetrieben durch die Dichtedifferenz des Gemisches in der Fermentationszone, die einen hohen Gasanteil und damit eine geringe Dichte aufweist, gegenüber dem im Umlaufrohr von oben nach unten strömenden gasfreien Gemisch aus gereinigtem Abwasser und Biomasse. Durch eine Zufuhr des Abwassers in das Umlaufrohr läßt sich die Umlaufströmung so beeinflussen, daß sich eine optimale Durchmischung des Gemisches in der Fermentationszone ergibt. Dieser Effekt kann gegebenenfalls durch eine diskontinuierliche Zufuhr des Abwassers weiter verbessert werden.

Ausführungsbeispiele des Erfindungsgegenstandes sind in den Zeichnungen dargestellt.

Es zeigen:
Fig. 1 die Vorrichtung nach der Erfindung im Schnitt.
Fig. 2 eine gegenüber Fig. 1 abgewandelte Ausführungsform der Vorrichtung.
Fig. 3 die Vorrichtung nach Fig. 1 in ergänzter Ausführungsform.
Fig. 4 die Vorrichtung nach Fig. 1 in einer Mehrfachanordnung.

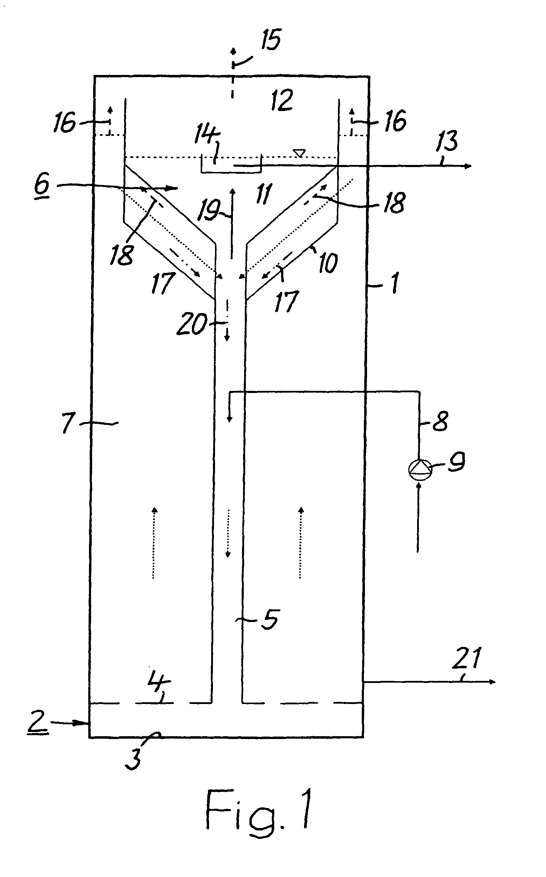

In Fig. 1 ist ein als Reaktor arbeitender Behälter 1 dargestellt. Der Behälter 1 hat einen Bodenbereich 2, in dem mit Abstand zum Boden 3 ein Verteiler 4 angebracht ist. Im Bodenbereich 2 endet ein Umlaufrohr 5, das bis in den oberen Bereich 6 des Behälters 1 ragt. Es ist im dargestellten Ausführungsbeispiel mittig im Behälter 1 angeordnet. Der oberhalb des Verteilers 4 liegende Bereich des Behälters 1 ist eine Fermentationszone 7.

Eine Rohrleitung 8 zum Zuführen von Abwasser ragt in den Behälter 1 hinein. Sie endet im dargestellten Ausführungsbeispiel im Umlaufrohr 5. Das Abwasser kann mit einer in der Rohrleitung 8 angeordneten Pumpe 9 in das Umlaufrohr 5 gepumpt werden.

Im oberen Bereich 6 des Behälters 1 ist ein Dreiphasen-Lamellenklärer 10 - im folgenden kurz "Klärer 10" genannt - angeordnet, der schräg zur Längsachse des Umlaufrohrs 5 verläuft und mit seinem unteren Ende in dasselbe übergeht. Der Klärer 10 besteht aus einem Paket von mehreren, jeweils mit Abstand parallel zueinander angeordneten Platten. Die Platten können aus Metall oder aus Kunststoff bestehen. Sie sollen eine möglichst glatte Oberfläche haben. Von diesen Platten sind in Fig. 1 der Einfachheit halber nur ein unteres und ein oberes dargestellt. Der Klärer 10 verläuft beispielsweise unter einem zwischen 30° bis 60° zur Achse des Umlaufrohrs 5 liegenden Winkel mit - ausgehend vom Umlaufrohr 5 - nach oben gerichteter Schräge. Die untere Platte des Klärers 10 geht ohne Zwischenraum in das Umlaufrohr 5 über. Die geometrische Form des Klärers 10 ist an den Querschnitt des Behälters 1 angepaßt. Er erstreckt sich mit Vorteil über 360° und umgibt das Ende des mittig im Behälter 1 angeordneten Umlaufrohrs 5 rundum.

Der oberhalb des Klärers 10 befindliche Raum des Behälters 1 ist eine Beruhigungszone 11, über welcher sich ein Gasraum 12 befindet. Gereinigtes Abwasser wird über eine Rohrleitung 13 aus der Beruhigungszone 11 bzw. aus einer in derselben befindlichen Sammeltasse 14 abgeleitet. Biogas kann durch eine durch einen Pfeil angedeutete Gasleitung 15 aus dem Gasraum 12 austreten. Das Biogas kann bei entsprechender Höhe des Behälters 1 auch im Verlauf der Fermentationszone 7 an mindestens einer Stelle aus dem Behälter 1 entnommen werden.

Das Verfahren nach der Erfindung wird mit einem Reaktor nach Fig. 1 beispielsweise wie folgt durchgeführt:

Zu reinigendes Abwasser wird dem Behälter 1 über die Rohrleitung 8 so zugeführt, daß es in dessen Bodenbereich gelangt. Es wird bei dieser vorteilhaften Ausführungsform des Reaktors über das Umlaufrohr 5 in den Bodenbereich 2 desselben geleitet und dort bewegt sowie durch den Verteiler 4 verteilt. In der Fermentationszone 7 bilden sich durch die Einwirkung von Bakterien kleine Teilchen von beispielsweise 2 mm bis 3 mm Größe, sogenannte Granülen. Der Abbau von im Abwasser enthaltenen Schadstoffen führt zur Bildung von Gas, dem Biogas, das sich in Form von Gasblasen an der Oberfläche der Granülen bildet und dort haften bleibt. Durch diesen als Fermentation bezeichneten Vorgang werden die Granülen leichter. Sie steigen daher im Behälter 1 nach oben auf, wobei die Gasblasen ständig weiter wachsen.

Wenn die Gasblasen ausreichend groß sind, trennen sie sich zum größten Teil als Biogas von den Granülen ab, welche die Biomasse bilden. Das Biogas gelangt in den Gasraum 12, indem es seitlich am Klärer 10 vorbei nach oben aufsteigt (Pfeile 16). Die dadurch wieder schwerer gewordenen Granülen sinken in die Fermentationszone 7 ab, um sich dort erneut mit Biogas zu beladen und wieder nach oben aufzusteigen. Die Granülen, bei denen sich das Biogas nicht hinreichend abgetrennt hat oder welche die für ein Absinken notwenige Größe nicht erreicht haben, treten gemeinsam mit dem aufströmenden Abwasser von oben her als Dreiphasengemisch in den Klärer 10 ein. Die Biomasse desselben lagert sich auf den Platten des Klärers 10 ab und rutscht auf denselben infolge ihrer Schräge in das Umlaufrohr 5 (Pfeile 17), während das von der Biomasse abgetrennte Biogas in dem Klärer 10 nach oben aufsteigt und entlang den Platten schräg nach oben aus dem Klärer 10 entweicht (Pfeile 18) und gemeinsam mit dem Biogas (Pfeile 16) in den Gasraum 12 übertritt.

Nicht abgelagerte und noch mit Biogas beladene Biomasse steigt in die Beruhigungszone 11 auf (Pfeil 19). Dort wird auch dieser Teil des Biogases von der Biomasse getrennt, die dann in Form von gasfreien Teilchen durch das Umlaufrohr 5 in den Bodenbereich 2 des Behälters 1 zurückgeführt wird (Pfeil 20). Das Biogas aus der Beruhigungszone 11 gelangt ebenfalls in den Gasraum 12. Das gereinigte Abwasser kann in der Sammeltasse 14 gesammelt und über die Rohrleitung 13 abgeleitet werden. Wegen der nur noch geringen Menge an organischen Inhaltsstoffen ist nur noch eine weniger aufwendige aerobe Nachbehandlung des gereinigten Abwassers erforderlich. Überschüssige Biomasse kann über eine Rohrleitung 21 aus dem Behälter 1 entnommen werden.

Durch das Zusammenwirken von Umlaufrohr 5 und Klärer 10 ergibt sich im Behälter bzw. im Reaktor eine wirkungsvolle Umlaufströmung, durch welche die Reaktionszeit im Reaktor deutlich verkürzt wird. Sie entsteht im wesentlichen durch die Differenz zwischen der Dichte des in der Fermentationszone 7 aufsteigenden Gemisches, das einen hohen Gasanteil und damit eine geringe Dichte aufweist, und der Dichte des im Umlaufrohr 5 von oben nach unten strömenden gasfreien und daher dichteren Gemisches aus gereinigtem Abwasser und Biomasse sowie über die Rohrleitung 8 zugeführten, zu reinigendem Abwasser.

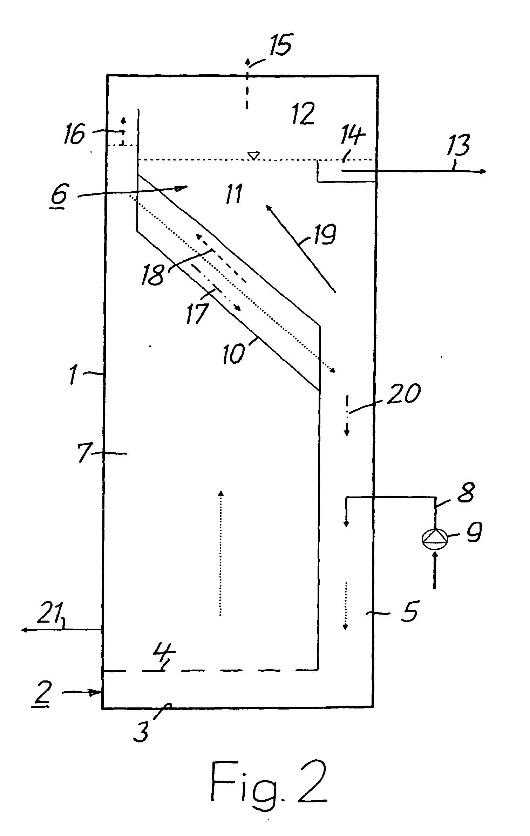

Der Reaktor kann auch mit einem aus Fig. 2 hervorgehenden Behälter 1 realisiert werden, bei dem das Umlaufrohr 5 nicht zentral, sondern an seiner Wandung des Behälters 1 angeordnet ist, die gleichzeitig eine Wandung des Umlaufrohrs 5 bildet. Bei dieser Ausführungsform des Reaktors hat der Behälter 1 vorzugsweise einen rechteckigen Querschnitt. Die geometrische Form des Klärers 10 ist auch hier an die Querschnittsform des Behälters 1 angepaßt. Die Arbeitsweise des Reaktors nach Fig. 2 ist die gleiche wie die des Reaktors nach Fig. 1.

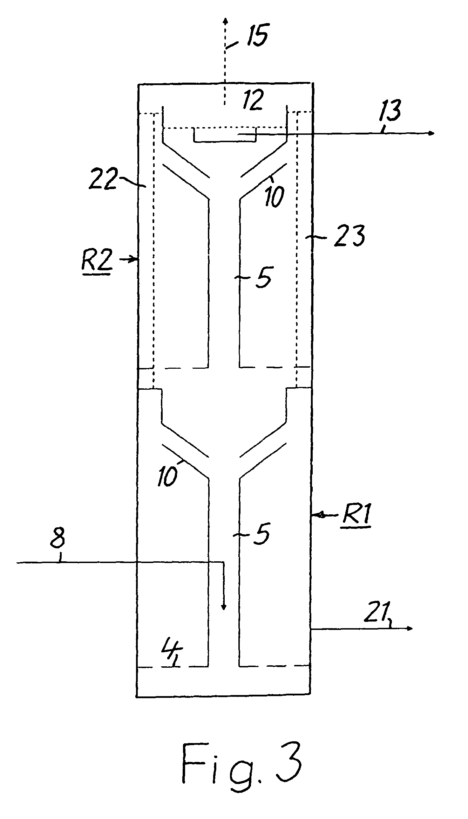

Zur weiteren Herabsetzung der Reaktionszeit bei der Abwasserreinigung und der Menge der organischen Inhaltsstoffe im gereinigten Abwasser können gemäß der schematischen Darstellung in Fig. 3 auch zwei Reaktoren nach Fig. 1 übereinander angeordnet werden. Dabei wird das zu reinigende Abwasser dem unteren Reaktor R1 über die Rohrleitung 8 zugeführt und das gereinigte Abwasser wird dem oberen Reaktor R2 mittels der Rohrleitung 13 entnommen. Das im Reaktor 1 gewonnene Biogas wird über entsprechende Kanäle 22 und 23 zum Gasraum 12 des oberen Reaktors 2 geführt und dort zusammen mit dem Biogas des Reaktors R2 entnommen. Der Behälter des oberen Reaktors R2 hat bei dieser Ausführungsform des Reaktors keinen Boden. Die Arbeitsweise des Doppelreaktors nach Fig. 3 entspricht der für den Reaktor nach Fig. 1 beschriebenen Arbeitsweise. Es können auch mehr als zwei Reaktoren übereinander angeordnet werden. Ihre Anzahl richtet sich nach den Eigenschaften des zu reinigenden Abwassers.

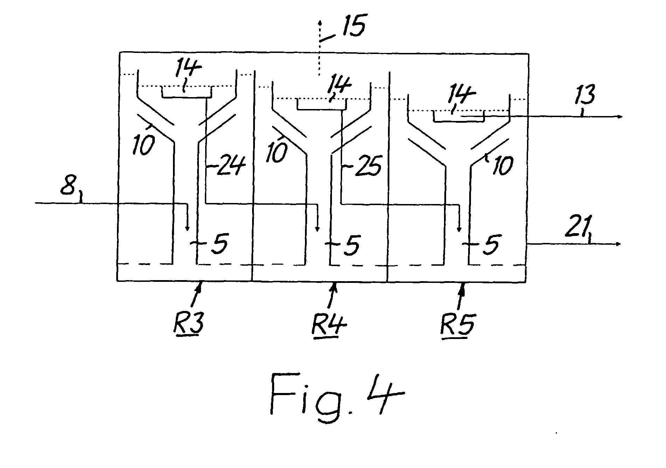

Entsprechend Fig. 4 können beispielsweise auch drei Reaktoren nach Fig. 1 kaskadenförmig nebeneinander angeordnet werden. Auch eine solche Anordnung von Reaktoren R3, R4 und R5 führt zu einer Verkürzung der Reaktionszeit und zur Verringerung der Menge an organischen Inhaltsstoffen im zuletzt entnommenen gereinigten Abwasser. Auch hier hängt die Anzahl der kaskadenförmig angeordneten Reaktoren von den Eigenschaften des zu reinigenden Abwassers ab.

Das zu reinigende Abwasser wird gemäß Fig. 4 dem ersten Reaktor R3 über die Rohrleitung 8 aufgegeben. Dessen gereinigtes bzw. vorgereinigtes Abwasser wird dem zweiten Reaktor R4 über eine Rohrleitung 24 als zu reinigendes bzw. weiter zu reinigendes Abwasser zugeführt, und zwar wieder mit Vorteil in das Umlaufrohr 5 des zweiten Reaktors R4. Dessen mit dem für Fig. 1 beschriebenen Verfahren weiter gereinigtes Abwasser wird dem dritten Reaktor R5 über eine mit Vorteil in dessen Umlaufrohr 5 endende Rohrleitung 25 als weiter zu reinigendes Abwasser aufgegeben. Das auf die Weise weiter von organischen Inhaltsstoffen befreite, gereinigte Abwasser wird über die Rohrleitung 13 aus dem dritten Reaktor R5 abgeführt. Auch überschüssige Biomasse kann über die Rohrleitung 21 aus dem dritten Reaktor R5 entnommen werden. Das gereinigte Abwasser kann dem jeweils folgenden Reaktor ohne den Einsatz einer Pumpe zugeführt werden. Es fällt von allein durch die jeweilige Rohrleitung 24 oder 25.

In den Fig. 3 und 4 sind die Reaktoren R1 und R2 bzw. R3 bis R5 in der Ausführungsform des Reaktors nach Fig. 1 dargestellt. Es können aber auch Reaktoren nach Fig. 2 oder sowohl Reaktoren nach Fig. 1 als auch nach Fig. 2 eingesetzt werden.

## Patentansprüche

1. Vorrichtung zur anaeroben Reinigung von Abwasser, bestehend aus mindestens einem Reaktor, der eine Zuflußöffnung zum Zuführen von Abwasser in seinen Bodenbereich, eine oberhalb des Bodenbereichs liegende Fermentationszone, eine in seinem oberen Bereich angeordnete Abflußöffnung für gereinigtes Abwasser, ein vom oberen Bereich des Reaktors bis zu dessen Bodenbereich führendes Umlaufrohr (5) und einen im oberen Bereich (6) unterhalb der Abflußöffnung für das gereinigte Abwasser angebrachten, aus einer Vielzahl von parallel und mit Abstand zueinander angeordneten Platten bestehenden Dreiphasen-Lamellenklärer (10) aufweist, der schräg zur Längsachse des Umlaufrohrs (5) mit nach oben gerichteter Schräge verläuft und der mit seinem unteren Ende in Gebrauchslage ohne Zwischenraum in das Umlaufrohr (5) übergeht, **dadurch gekennzeichnet, daß** seitlich vom Dreiphasen-Lamellenklärer (10) ein Durchlaß zum Auslaß von Biogas aus der Fermentationszone (7) vorhanden ist, welcher dem Dreiphasen-Lamellenklärer (10) derart zugeordnet ist, daß sich beim Betrieb der Vorrichtung eine durch die Dichtedifferenz des einen hohen Gasanteil aufweisenden Gemisches in der Fermentationszone gegenüber dem im Umlaufrohr (5) von oben nach unten strömenden gasfreien Gemisch aus gereinigtem Abwasser und Biomasse angetriebene, durch Fermentationszone (7), Dreiphasen-Lamellenklärer (10) und Umlaufrohr (5) bewegte Umlaufströmung ergibt, wobei das restliche Gemisch des Dreiphasengemischs Abwasser-Biomasse-Biogas seitlich, von oben in den Dreiphasen-Lamellenklärer (10) eintritt.

2. Vorrichtung nach Anspruch 1, **dadurch gekennzeichnet, daß** das Umlaufrohr (5) mittig im Reaktor angeordnet ist.

3. Vorrichtung nach Anspruch 1, **dadurch gekennzeichnet, daß** das Umlaufrohr (5) an einer Seitenwand des Reaktors angeordnet ist.

4. Vorrichtung nach einem der Ansprüche 1 bis 3, **dadurch gekennzeichnet, daß** mindestens zwei Reaktoren (R1,R2) übereinander angeordnet sind, wobei der Behälter des oberen Reaktors (R2) keinen Boden hat.

5. Vorrichtung nach einem der Ansprüche 1 bis 3, **dadurch gekennzeichnet, daß** mindestens zwei, vorzugsweise drei Reaktoren (R3,R4,R5) kaskadenartig nebeneinander angeordnet sind, wobei jeweils eine Rohrleitung (24,25) zur Zuführung von gereinigtem Abwasser vom jeweils vorangehenden Reaktor zum Umlaufrohr (5) des nachfolgenden Reaktors angebracht ist.

6. Verfahren zur anaeroben Reinigung von Abwasser, unter Verwendung mindestens einer Vorrichtung nach Anspruch 1 mit einem Reaktor, der eine Zuflußöffnung zum Zuführen von Abwasser in seinen Bodenbereich und eine in seinem oberen Bereich angeordnete Abflußöffnung für gereinigtes Abwasser aufweist, **dadurch gekennzeichnet,**
- **daß** das Abwasser einem im Reaktor angeordneten Umlaufrohr (5) zugeführt wird, das von seinem Bodenbereich (2) bis zu seinem oberen Bereich (6) führt,
- **daß** das aus dem Bodenbereich (2) des Reaktors in einer Fermentationszone (7) nach oben aufsteigende Biogas und mit Biogas beladene Biomasse enthaltende Abwasser einem im oberen Bereich (6) des Reaktors angeordneten Dreiphasen-Lamellenklärer (10) zugeführt wird, welcher mit dem Umlaufrohr (5) verbunden ist, und
- **daß** das Abwasser zusammen mit von oben in das Umlaufrohr (5) eintretender Biomasse in einer Umlaufströmung durch Fermentationszone (7), Dreiphasen-Lamellenklärer (10) und Umlaufrohr (5) bewegt wird.

## Claims

1. Apparatus for the anaerobic cleaning of waste water, comprising at least one reactor which has an inflow opening, for feeding waste water into its base region, a fermentation zone, which is located above the base region, an outflow opening for cleaned waste water, this opening being arranged in the upper region of the reactor, a circulation tube (5), which leads from the upper region of the reactor to the base region thereof, and a three-phase lamella clarifier (10) which is fitted in the upper region (6), beneath the outflow opening for the cleaned waste water, comprises a multiplicity of spaced-apart plates, arranged parallel to one another, slopes upwards obliquely in relation to the longitudinal axis of the circulation tube (5) and, in the use position, has its lower end merging, without any interspace, into the circulation tube (5), **characterized in that** a through-passage is present to the side of the three-phase lamella clarifier in order to allow biogas to exit from the fermentation zone (7), this through-passage being assigned to the three-phase lamella clarifier (10) so as to give rise, during operation of apparatus, to a circulation flow which moves through the fermentation zone (7), three-phase lamella clarifier (10) and circulation tube (5) and is driven by the difference in density between the mixture in the fermentation zone, this mixture having a high proportion of gas, and the gas-free mixture of cleaned waster water and biomass which flows from top to bottom in the circulation tube (5), wherein the remaining three-phase waste-water/biomass/biogas mixture enters into the three-phase lamella clarifier (10) from above.

2. Apparatus according to claim 1, **characterized in that** the circulation tube (5) is arranged centrally in the reactor.

3. Apparatus according to claim 1, **characterized in that** the circulation tube (5) is arranged on a side wall of the reactor.

4. Apparatus according to one of the claims 1 to 3, **characterized in that** at least two reactors (R1, R2) are arranged one above the other, wherein the tank of the upper reactor (R2) has no base.

5. Apparatus according to one of the claims 1 to 3, **characterized in that** at least two, preferably three, reactors (R3, R4, R5) are arranged in cascade form one beside the other, wherein a respective pipeline (24, 25) is provided for feeding cleaned waste water from the respectively preceding reactor to the circulation tube (5) of the following rector.

6. Method for the anaerobic cleaning of waste water using at least one apparatus according to claim 1 having a reactor, which has an inflow opening, for feeding waste water into its base region, and an outflow opening for cleaned waste water, this opening being arranged in the upper region of the reactor, **characterized in**
- **that** the waste water is fed to a circulation tube (5), which is arranged in the reactor and leads from the base region (2) of the latter to the upper region (6) thereof,
- **that** the biogas rising upwards from the base region (2) of the reactor in a fermentation zone (7) and waste water containing biomass loaded with biogas are fed to a three-phase lamella clarifier (10), which is arranged in the upper region (6) of the reactor and is connected to the circulation tube (5), and
- **that** the waste water, together with biomass entering into the circulation tube (5) from above, is moved in a circulation flow through the fermentation zone (7), three-phase lamella clarifier (10) and circulation tube (5).

## Revendications

1. Dispositif d'épuration anaérobie d'eau usée, constitué d'au moins un réacteur qui présente :
une ouverture d'amenée qui permet d'amener l'eau usée dans la partie de fond du réacteur, une zone de fermentation située au-dessus de la partie de fond et une ouverture d'évacuation de l'eau usée épurée disposée dans sa partie supérieure,
un tube de recirculation (5) qui conduit de la partie supérieure du réacteur à sa partie de fond et
un décanteur triphasique (10) à lamelles installé dans la partie supérieure (6) en dessous de l'ouverture d'évacuation de l'eau épurée et constitué de plusieurs plaques disposées parallèlement les unes aux autres et à distance les unes des autres, qui s'étend obliquement par rapport à l'axe longitudinal du tube de recirculation (5) avec une pente orientée vers le haut et dont, en position d'utilisation, l'extrémité inférieure se prolonge en le tube de recirculation (5) sans laisser d'espace intermédiaire, **caractérisé en ce**
**qu'**un passage permettant au biogaz de sortir hors de la zone de fermentation (7) est prévu sur le côté du décanteur triphasique (10) à lamelles et est associé au décanteur triphasique (10) à lamelles de telle sorte que lorsque le dispositif est en fonctionnement, il s'établit dans la zone de fermentation (7), dans le décanteur triphasique (10) à lamelles et dans le tube de recirculation (5) un écoulement de recirculation entraîné par la différence de densité entre le mélange présent dans la zone de fermentation et à haute teneur en gaz et le mélange exempt de gaz, constitué d'eau usée épurée et de biomasse, qui s'écoule du haut vers le bas dans le tube de recirculation (5), le reste du mélange triphasique d'eau usée, de biomasse et de biogaz pénétrant latéralement par le haut dans le décanteur triphasique (10) à lamelles.

2. Dispositif selon la revendication 1, **caractérisé en ce que** le tube de recirculation (5) est disposé au centre du réacteur.

3. Dispositif selon la revendication 1, **caractérisé en ce que** le tube de recirculation (5) est disposé sur une paroi latérale du réacteur.

4. Dispositif selon l'une des revendications 1 à 3, **caractérisé en ce qu'**au moins deux réacteurs (R1, R2) sont disposés l'un au-dessus de l'autre, le récipient du réacteur supérieur (R2) ne présentant pas de fond.

5. Dispositif selon l'une des revendications 1 à 3, **caractérisé en ce qu'**au moins deux et de préférence trois réacteurs (R3, R4, R5) sont disposés en cascade les uns à côté des autres, un conduit tubulaire (24, 25) permettant de transférer l'eau usée épurée d'un réacteur précédent au tube de recirculation (5) du réacteur suivant.

6. Procédé d'épuration anaérobie d'eau usée, utilisant au moins un dispositif selon la revendication 1, comprenant un réacteur qui présente une ouverture d'amenée qui permet d'amener de l'eau usée dans sa partie de fond et une ouverture d'évacuation d'eau usée épurée disposée dans sa partie supérieure,
**caractérisé en ce que**
- l'eau usée est amenée dans un tube de recirculation (5) disposé dans le réacteur et reliant sa partie de fond (2) à sa partie supérieure (6),
- **en ce que** le biogaz remontant vers le haut depuis la partie de fond (2) du réacteur et l'eau usée contenant de la biomasse chargée en biogaz dans une zone de fermentation (7) sont amenés dans un décanteur triphasique (10) à lamelles disposé dans la partie supérieure (6) du réacteur et relié au tube de recirculation (5) et
- **en ce que** l'eau usée est déplacée en même temps que la biomasse qui pénètre par le haut dans le tube de recirculation (5) en un écoulement de recirculation qui traverse la zone de fermentation (7), le décanteur triphasique (10) à lamelles et le tube de recirculation (5).
